# EUROPEAN PATENT APPLICATION

(11) **EP 3 766 785 A1**
(43) Date of publication of application: **20.01.2021**
(21) Application number: 19382608.8
(22) Date of filing: 18.07.2019
(51) Int. Cl.: B64D 47/04, B64F 1/00

(54) **LIGHTING SYSTEM FOR AN AIRCRAFT**

(71) Applicant: Airbus Operations, S.L.U., 28906 Getafe (Madrid) (ES)
(72) Inventor: DE SOUSA LIBANIO FADIGAS, Joao, E-28906 Getafe - Madrid (ES); DE BROUWER, Gabrielle Josephine Christiane, E-28906 Getafe - Madrid (ES)
(74) Representative: ABG Intellectual Property Law, S.L.

(57) **Abstract**

The present invention defines a lighting system that provides suitable visibility conditions to the cockpit crew accounting external weather conditions. The lighting system comprises: sensor(s) configured to sense at least weather conditions, a control unit for receiving data from the sensor(s) and relative to the aircraft operation condition, for determining offset light, and providing mask data accordingly. Further, the lighting system comprises light source(s) configured to project a light beam, and light filtering device configured to receive the mask data and to adapt the light beam intensity of the light source(s) according to such mask data.

## Description

### TECHNICAL FIELD OF THE INVENTION

The present invention belongs to the field of lighting in aircrafts, and particularly relates to a lighting system providing suitable visibility conditions to the cockpit crew accounting external weather conditions.

Apart from weather conditions, the present invention focuses on collision avoidance with runway safety hazards, especially within the Terminal Manoeuvring Area (TMA). Therefore, by the present invention, situation awareness of the cockpit crew on runway traffic is enhanced.

### BACKGROUND OF THE INVENTION

Nowadays, aircraft are equipped with external lights for providing visibility to the pilot or cockpit crew in dark situations such as at night. Each of these external lights are specifically arranged, oriented, and designed to meet their intended purpose.

Most typical external lights comprise taxi lights, take-off and landing lights depending on the specific flight phase where the aircraft is operating. For instance, aircraft uses medium intensity lights -taxi lights- illuminating the taxiway during *on-ground* operations.

On the other hand, landing and take-off lights are higher intensity lights mainly used to illuminate the runway during take-off or landing, as well as to facilitate the aircraft being seen by other pilots.

Regarding their placement, external lights are typically mounted on the nose landing gear, along the wing, at the landing gear strut (i.e. the main landing gear) or fuselage mounted depending on their accessibility to the area to illuminate.

Therefore, they are conceived as intensity-fixed and static illumination sources. An example of this are the runway turnoff lights, similar to static taxi lights but mounted on an angle pointing to the sides of the aircraft nose landing gear in order to illuminate the taxiway on its sides.

However, aircrafts need to operate in a wide range of weather conditions which normally drastically reduce the ability of the cockpit crew to correctly see the runway. Particularly, with fog or heavy rain conditions, the exterior lights can produce disability glare to the crew.

Thus, the current external lights do not provide the right illumination characteristics for the entire range of operations of an aircraft.

Especially *on-ground,* the aircraft may come across with traffic of ground or service vehicles, pedestrians, or even animals on the runway which are normally deemed as potential runway safety hazards. This is stressed at night or with low visibility conditions when the movement of these unexpected hazards may not be adverted by the cockpit crew as runway turnoff lights are directed to sides of the aircraft illuminating specific spots of the runway.

Accordingly, there is a need for an aircraft lighting system which provides satisfactory illumination for all aircraft operational conditions and which enhances operation safety.

### SUMMARY OF THE INVENTION

The present invention provides a solution for the aforementioned problems, by a lighting system according to claim 1, a method for adapting at least one light beam of an aircraft taking into account in situ conditions of such aircraft according to claim 14, and an aircraft according to claim 18. In dependent claims, preferred embodiments of the invention are defined.

In a first inventive aspect, the invention provides a lighting system for an aircraft, the system comprising:
- at least one sensor configured to sense at least weather conditions,
- at least one control unit configured to:
   receive data from the at least one sensor and data relative to an aircraft operation condition,
   determine an offset light based on the received data, and
   provide mask data corresponding to the determined offset light,
- at least one light source configured to project a light beam, and
- a light filtering device configured to receive the mask data from the control unit and to adapt the light beam intensity of the at least one light source according to the mask data.

As it was mentioned, weather conditions such as rain or fog modify the ambient light affecting the correct pilot vision of the runway or taxiway.

Throughout the entire description, 'mask data' should be understood as data readable by the light filtering device containing the necessary corrections to the light beam characteristics that need to be projected therefrom.

These corrections on the amount of light that need to be projected are determined according to the data received by the control unit. If illumination is considered as inadequate, the light filtering device adapts the intensity of the light beam projected from the light source light, that is, in further advantageous embodiments, the illumination provided by the lighting system is adjusted in a light feedback loop.

Particularly, the light corrections may respond to the actual illumination reaching the cockpit of the aircraft, detected for example thanks to a camera or a set of sensors arranged nearby, as an extrapolation of the weather conditions and aircraft operation condition.

As a result, the lighting system according to the invention provides comfortable illumination levels and reduces potential disability glare under certain weather conditions to the cockpit crew.

Furthermore, the aircraft is equipped with one or several sensors (e.g. camera) for sensing the surroundings of the aircraft such as weather conditions or potential hazards in movement; and, on the other hand the lighting system receives information relative to the aircraft operation condition.

By superposing both inputs, the lighting system according to the invention evaluates at an aircraft-level the situational awareness of the pilot (or cockpit crew) and mitigates the illumination-related hazards as well as aids in conflict detection within the TMA. As it will be seen hereinafter, the present invention relies on conflict detection algorithms and alerting display concepts.
The at least one light source may substitute or be additional to the external lights of the aircraft. For instance, suitable light sources may be of the type a laser, a LED or a typical gas lamp or filament technology. Preferably, at least one light source is a laser or a LED, due to their benefits in power consumption and lifetime in aeronautical applications.

Regarding the at least one sensor of the aircraft lighting system, in a particular embodiment, it may be at least one of the following types: an optic camera, an IR camera, Laser Imaging Detection and Ranging (*so-called* LIDAR), or even humidity or sound pressure sensors which facilitates the weather condition acknowledgement.

As mentioned, in the offset light determination, the control unit further accounts data relative to the aircraft operation condition. That is, the control unit may distinguish various operational scenarios based on avionics input from the aircraft, such as relative position within the airport, attitude, speed, or the like.

In a particular embodiment, the control unit is adapted to receive the aircraft operation conditions from data collected by an Air Data Inertial Reference System of the aircraft, by an Air Traffic Control station and/or by a Navigation System of the aircraft.

Similarly, aircraft operation conditions may come from other data collecting unit on the aircraft.

The lighting system of the present invention further provides an enhanced, dynamically adapted illumination capable to highlight specific elements of interest on the runway/taxiway such as foreign objects *-potential hazards-* that can contribute to a safer operation during the night or darkness, for instance.

Therefore, in a particular embodiment, the light filtering device is further configured to modify the light beam trajectory according to the mask data received from the control unit.

Thus, the lighting system is able to highlight ground or service vehicles, pedestrians, or even animals on the runway/taxiway that the aircraft may come across with. In addition, the low visibility conditions when the movement of these unexpected objects entails a risk are avoided as the lighting system can detect their presence and dynamically illuminate them of the runway.

As a further advantage, in a particular embodiment, the light filtering device is configured to modify the light beam shape of the least one light source based on the mask data received from the control unit in order to project signs on the ground.

In a particular embodiment, the lighting system may project ground markings and signs on the ground such as arrows for runway turnoff or warning signals.

An example of a light filtering device able to modify the light beam trajectory and/or the light beam shape of the least one light source is a Digital Light Processing filter, for instance, through an LCD ('*Liquid Cristal Display*') screen, or a DMD ('Digital Micro-mirror Device') system to digitally control the light output.

In a particular embodiment, the light filtering device is further configured to adapt the light beam colour tone of the at least one light source according to the mask data. This is of special interest in case of rain as it will be explained.

As mentioned hereinbefore, the control unit is configured to determine the offset light in accordance to pre-determined algorithms which, based on the inputs received, respectively command the light filtering device to make safer the operation of the aircraft by increasing the situational awareness of the pilot.

In a particular embodiment, the control unit is configured to determine the offset light according to weather conditions in accordance to a first pre-determined algorithm which takes into account at least weather conditions in the surroundings of the aircraft.

It is to be noted that the algorithms may be also understood as working modes.

In another embodiment, especially when at least one of the sensors is a LIDAR, the control unit is configured to determine the offset light in accordance to a second pre-determined algorithm which identifies foreign objects within the vicinity of the aircraft detected by said sensor and to direct the light beam trajectory to said foreign objects.

In yet another embodiment, the light filtering device is configured to modify the light beam shape of the least one light source in accordance to a third pre-determined algorithm and based on the mask data received from the control unit in order to project signs on the ground.

The setting of any of above pre-determined algorithms are available to the pilot by the Control Panel in the aircraft cockpit. Accordingly, the pilot may readily choose the level of aid provided by the lighting system for safe operation.

It is to be noted that the aircraft comprises a Control Panel, preferably arranged in the cockpit.

Thus, in a preferred embodiment, the control unit is configured to operate under conditions defined in a Control Panel of the aircraft cockpit in order to access the first, second and/or third pre-determined algorithms, the conditions being as follows:
- in case the Control Panel commands the control unit not to access any of the pre-determined algorithms, the light filtering device is disabled;
- in case the Control Panel commands the control unit to access the first pre-determined algorithm, the light filtering device is enabled to adapt the light beam intensity of the least one light source;
- in case the Control Panel commands the control unit to access the second pre-determined algorithm, the light filtering device is further enabled to modify the light beam trajectory of the least one light source;
- in case the Control Panel commands the control unit to access the third pre-determined algorithm, the light filtering device is further enabled to modify the light beam shape of the least one light source.

Preferably, above conditions are defined by the cockpit crew in the Control Panel of the aircraft cockpit by means of switches. Depending on the position of the switches, the control unit is allowed to access particular pre-determined algorithms, and therefore the light filtering device is configured to operate accordingly.

In a particular embodiment, the control unit is configured to operate under conditions defined through a remote control in order to access the first, second and/or third pre-determined algorithms, the conditions being as follows:
- in case the remote control commands the control unit not to access any of the pre-determined algorithms, the light filtering device is disabled;
- in case the remote control commands the control unit to access the first pre-determined algorithm, the light filtering device is enabled to adapt the light beam intensity of the least one light source;
- in case the remote control commands the control unit to access the second pre-determined algorithm, the light filtering device is further enabled to modify the light beam trajectory of the least one light source;
- in case the remote control commands the control unit to access the third pre-determined algorithm, the light filtering device is further enabled to modify the light beam shape of the least one light source.

In a particular embodiment, the control unit is further configured to self-regulate the access to particular pre-determined algorithms so that the light filtering device is enabled to operate under conditions thereby defined.

The algorithms (or working modes) may be activated in a different way than through the Control Panel, for example to alleviate the work of the cockpit crew:
i. they may be activated by a team on ground based on contextual information received from the aircraft, or
ii. they may even be activated automatically through setting of the control unit itself that would detect the appropriate conditions, such as on ground, or in flight with humid weather.

This latter scenario ('automatic mode') may be valid as long as the data it uses are received correctly, whilst the 'manual mode' (through the Control Panel or remotely) may be activated once it is no longer the case.

In a particular embodiment, the light filtering device is configured to operate under simultaneous conditions allowing the control unit to access to at least two of the particular pre-determined algorithms simultaneously.

In a second inventive aspect, the invention provides a method for adapting the at least one light beam projected from at least one light source of an aircraft, the aircraft comprising a lighting system according to any of embodiments of the first inventive aspect, taking into account in situ conditions of such aircraft, the method comprising:
a) collecting by the at least one sensor at least data regarding weather conditions;
b) receiving by at least one control unit data:
   - from the at least one sensor, and
   - data relative to the aircraft operation condition;
c) determining by said at least one control unit an offset light based on the data received;
d) outputting by said at least one control unit the offset light in form of mask data to a light filtering device of the lighting system; and
e) said light filtering device adapting the light beam intensity of the at least one light source according to the mask data received from the control unit.

In particular embodiments, step (f) of the method further comprises:
said light filtering device further modifying the light beam trajectory according to said mask data received from the control unit; and/or
said light filtering device further modifying the light beam shape of said least one light source according to the mask data received from the control unit, in order to project signs on the ground.

In a particular embodiment, the method further comprises a step of:
continuously adapting by the light filtering device the light beam intensity of the at least one light source according to the mask data received from the control unit so that the illumination provided by the lighting system is adjusted in a light feedback loop.

In a third inventive aspect, the invention provides an aircraft comprising a lighting system according to any of the embodiments of the first inventive aspect; or for using the method according to any of the embodiments of the second inventive aspect.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows typical external lights arrangement of an aircraft.
- Figure 2: This figure shows a schematic flowchart with the functioning of an embodiment of the lighting system according to the present invention.
- Figure 3a-c: These figures show the sequence in detecting a foreign object in the neighbouring of the aircraft; changing the trajectory of the light source to it; and projecting a warning signal on the road, respectively.
- Figure 4a-b: These figures show the sequence in detecting a runway exit, and projecting an arrow accordingly.

### DETAILED DESCRIPTION OF THE INVENTION

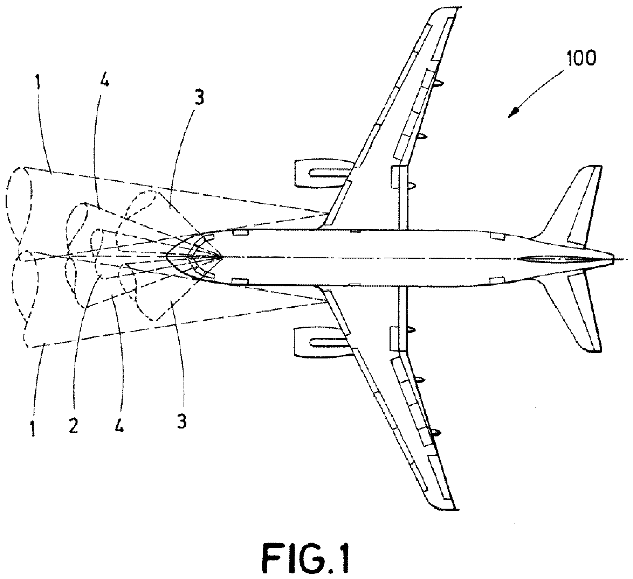

Figure 1 depicts a schematic aircraft comprising a conventional lighting system formed by intensity-fixed and static illumination sources.

In particular, it can be seen taxi lights (2) and landing lights (1) directed to the front of the aircraft to illuminate its path. In this particular example, taxi lights (2) are installed on the nose of the aircraft while landing lights (1) are installed on the root of each wing, and the take-off lights (4) are installed on the main landing gear.

Furthermore, it can be seen in figure 1 two runway turnoff lights (3), each one directed to one side of the aircraft in order to illuminate the runway on its sides.

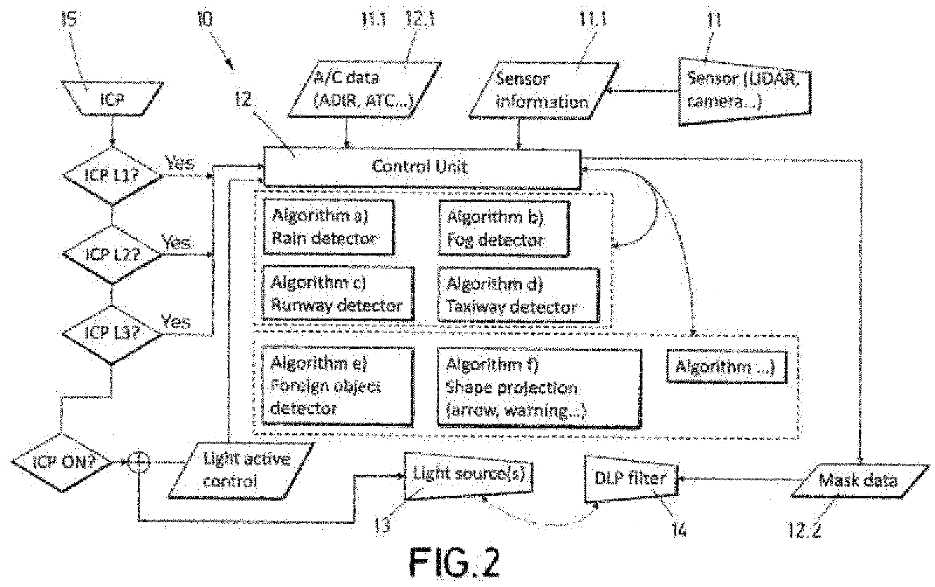

In figure 2, a schematic architecture of an embodiment of the lighting system (10) according to the present invention is depicted. In addition, a flowchart indicating the functioning of this lighting system (10) is shown.

The lighting system (10) according to the invention comprises:
- at least one sensor (11) configured to sense at least weather conditions (11.1),
- at least one control unit (12) configured to:
   receive data (11.1) from the at least one sensor (11) and data (12.1) relative to an aircraft operation condition,
   determine an offset light based on the received data, and
   provide mask data (12.2) corresponding to the determined offset
      light,
- at least one light source (13) configured to project a light beam, and
- a light filtering device (14) configured to receive the mask data (12.2) from the control unit (12) and to adapt the light beam intensity of the at least one light source (13) according to the mask data (12.2).

Briefly, the invention provides a lighting system (10) able to adapt the illumination of the runway based on feedback it receives from *in situ* aircraft operation (12.2) and external sensors (11.1).

Particularly, a control unit (12) (i.e. a data processing apparatus) of the lighting system (10), based on the data received (11.1, 12.1), automatically determines the beam characteristics necessary to provide good visual conditions to the cockpit crew.

The control unit (12) is connected to a light filtering device (14) configured to modify the light beam intensity of the light source (13). This allows actively controlling the light beam intensity for locally intensifying or diming the beam to provide a more comfortable illumination distribution according to the pilot needs.

Sensors (11) such as LIDAR or cameras are associated with the control unit (12) to provide an accurate mapping of the runway/taxiway terrain so that the illumination therein can be adapted in real time according to *in situ* operational conditions. With that continuous field survey, if hazards (16) invade the runway close to the aircraft (100), light sources (13) highlight them in order for the pilot to be aware of their presence.

Further, especially with bad weather, pilot may overlook ground signalling because of low visibility conditions. By the input received by these sensors (11) (e.g. LIDAR or cameras), signals may be also highlighted to support a safe operation of the aircraft (100).

Additionally, augmented reality features (17) may be projected *on-ground* to aid the pilot to move safely within the TMA. These augmented reality features (17) may be warning signals, arrows or indications to safety run throughout the runway/taxiway for convey support information from tower control, for instance.

As it can be seen, the depicted box represents the control unit (12), which in turn hosts a plurality of pre-determined algorithms. Each of these algorithms enables a distinct operational level of the lighting system (10).

In particular, there is three main pre-determined algorithms:
- A first pre-determined algorithm which takes into account at least weather conditions (11.1) such as rain or fog in the surroundings of the aircraft. By a given weather condition (see depicted algorithms (a) to (d)), the control unit determines the offset light needed.
- A second pre-determined algorithm which, based on data (11.1) received from LIDAR(11), makes the control unit (12) to identify foreign objects (16) *-e.g. signals or hazards-* within the vicinity of the aircraft, and to direct the light beam trajectory to them.
- A third pre-determined algorithm wherein the light filtering device (14) is configured to modify the light beam shape of the light source(s) (13) in order to project signs (17) *on-ground.*

As it can be seen from figure 2, the first pre-determined algorithm may further take into account when the aircraft (100) is running on, or approaching to, the taxiway or runway, respectively, in order to modify the intensity of the light beam. This is of special application when the light source (13) of the present invention replaces the conventional runway illumination devices such as taxi (2), take-off (4) and landing (1) lights, having a higher intensity when acting as 'landing lights' (1) or 'take-off lights' (4) than 'taxi lights' (2).

Particular examples of how the first pre-determined algorithm works can be seen as follows. A situation where the lighting system (10) comprises taxi lights (2), landing lights (1), take-off light (4) and runway turnoff lights (3) associated with respective light filtering devices (14) is considered.

It is to be noted that a single light filtering device (14) may be associated with one or more light sources (13), or be associated one (13) to one (14).

The control unit (12) receives information from the LIDAR (11) together with the humidity sensor (11) detecting rain or fog, in order to access algorithm (a) or (b), respectively.

Then, depending on the Air Data Inertial Reference System data (12.1) relative to the aircraft operation condition, the control unit (12) distinguishes whether the aircraft (100) is *in-flight* or *on-ground.*

Further, if the aircraft is *on-ground,* the control unit may acknowledge whether the aircraft is on the runway or on the taxiway, thanks, for instance, to the Navigation System of the aircraft. In such cases, the control unit accesses to the algorithms (c) or (d), respectively.

Therefore, based on the information received (11.1, 12.1), the control unit (12) recognizes the operational situation of the aircraft and accesses by default to the more suitable algorithm.

In principle, for a case of fog *in-flight,* light intensity needs to be less diffuse so as to produce less glare. This is accomplished by focusing the beam of all the light sources (13) present. Depending on *in situ* conditions such as aircraft speed and opacity of the fog detected, the control unit (12) may control the factor of focus to make it evolve dynamically.

On the other hand, for a case of fog *on-ground,* the light beams of all the light sources (13) need to be oriented downwards to diminish the glare to the cockpit crew as well and still providing well illumination of the ground.

More especially, if the aircraft is on the runway, take-off lights (4) should be kept on, whereas if the aircraft is on the taxiway, the take-off light beam intensity should be lowered so as to only keep taxi (2) and runway turnoff (3) lights in such a way glaring is limited.

In case of rain, the light colour is preferably altered to a more yellow tone in order to compensate the blue component revealed by the rain. In its absence, the blue tone revealed by the rain would make the light sources (13) less efficient to distinguish colours. Particularly, colour tones are defined by CRI ('*Colour Rendering Index*') values, according to which LEDs with a high concentration of blue colour tone shall have a low CRI.

It should be noted that, *in-flight*, the aircraft speed is too high so as to properly detect any object (16) and, furthermore, there is no surface on which to project specific shapes (17). Therefore, second and third pre-determined algorithms - depicted as (e) and (f) in figure 2- may be only accessed by the control unit when the aircraft operates *on-ground.*

Particular examples of how the second pre-determined algorithm (shown as algorithm (e) in figure 2) works can be seen as follows.

The recorded data (11.1) by LIDAR or camera is received by the control unit (12), which in turn comprises an image interpretation algorithm allowing to detect an object (16) in the vicinity of the aircraft (100).

Object (16) identification may be done, for instance, by identifying a shape that does not move as the rest of the surroundings, either being static or moving in a different direction as the air surrounding the aircraft. Then, control unit (12) commands the light filtering device (14) to modify the light beam trajectory of any of the light sources (13) so that a specific illumination focus is made on that object (16). Accordingly, the attention of the cockpit crew is attracted therein.

Depending on the object relative position with regard to the aircraft, the take-off, landing (1), runway turnoff (3) or taxi (2) light(s), (or any other light installed as part of the external lighting system according to the invention) may contribute to highlight the object (16).

Similarly, the second pre-determined algorithm may be configured to identify signalling (16) on the taxiway or runway in order to highlight them and increase safety of the aircraft road.

The control unit (12) may further access to the third pre-determined algorithm (shown in figure 2 as algorithm (f)). Therefore, visual information (17) is displayed on the runway as a complemental or a substitutive information for the pilot. Apart from arrows or warning signal, 'GO' / 'NO GO' alerts from Air Tower Control, number of the runway, gate information, turn by turn guidance, etc. may be projected.

It is to be noted that lighting projection protocol may be developed for correct understanding of the pilot or cockpit crew, *inter alia*, continuous lights, flashes, specific words, etc.

As mentioned, in an embodiment the lighting system (10) operates as defined in the Control Panel (15) of the aircraft cockpit enabling the control unit (12) to access to any of above-explained pre-determined algorithms. In other words, the control unit likewise operates under the conditions defined in the Control Panel in order to access the first, second and/or third pre-determined algorithms, thus enabling the light filtering device work differently.

In particular, the lighting system (10) according to the present invention is activated by switches that turn on different levels of intervention.

Such conditions are as follows:
- in case the Control Panel (15) commands the control unit (12) not to access any of the pre-determined algorithms, the light filtering device (14) is disabled. That is, the lighting system (10) works as intensity-fixed and static illumination sources;
- in case the Control Panel (15) commands the control unit (12) to access the first pre-determined algorithm (algorithms (a) to (d)), the light filtering device (14) adapts the light beam intensity of the least one light source (13);
- in case the Control Panel (15) commands the control unit (12) to access the second pre-determined algorithm (algorithm (e)), the light filtering device (14) further modifies the light beam trajectory of the least one light source (13);
- in case the Control Panel (15) commands the control unit (12) to access the third pre-determined algorithm (algorithm (f)), the light filtering device (14) modifies the light beam shape of the least one light source (13).

Notwithstanding the above, other specific algorithms may be envisaged with the present invention according to particular operations of the aircraft. In particular, simultaneous modes of these algorithms can be used.

The algorithms (or working modes) may be activated in a different way than through the ICP, for example to alleviate the charge of the piloting crew: it could be activated by a team on ground based on contextual information received from the aircraft, or it could even be activated automatically through an additional feature of the control unit that would detect the appropriate conditions: on ground, or in flight with humid weather... The automatic mode could be valid as long as the data it uses are received correctly, and the manual mode could be activated once it is no longer the case.

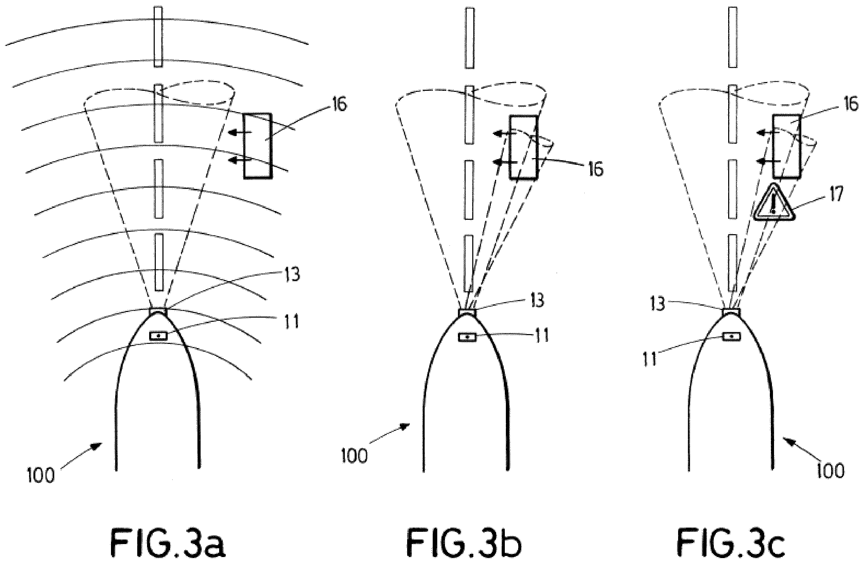

Figures 3a to 3c depict a schematic representation of a foreign object (16) detection in the neighbouring of the aircraft (100) for highlighting it; and further projection of a warning signal (17) on the road.

In figure 3a, it is reproduced the cockpit view of the pilot. If the sensor (11) (e.g. LIDAR or camera) detects that a foreign object (16) is invading the runway path of the aircraft, the control unit (12) by means of the second pre-determined algorithm can command the light filtering device (14) and change the trajectory of the light source (13) beam toward the object (16). This is shown in figure 3b.

Further, to increase the situational awareness of the pilot, an additional warning signal (17) is displayed on the ground as shown in figure 3c.

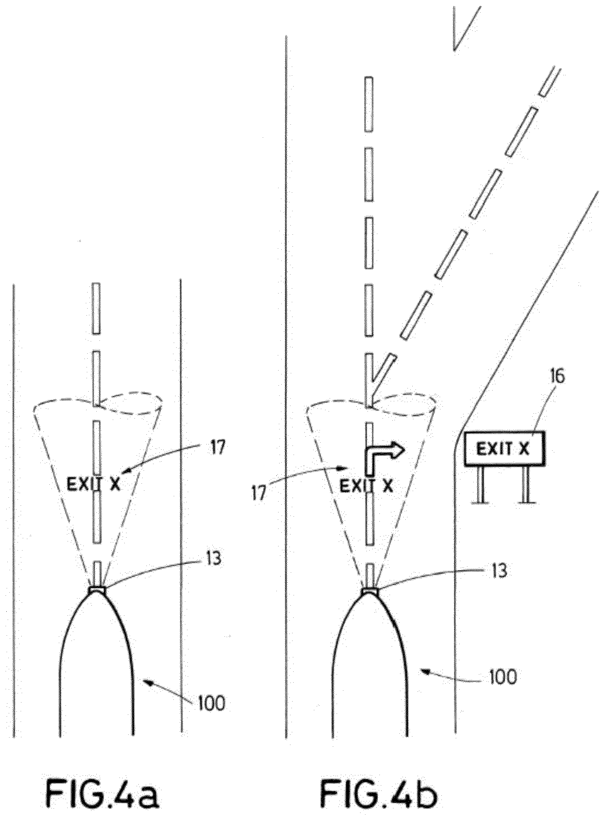

Figure 4a shows the same point of view than figures 3a to 3c but in a different operational scenario. In figure 4a, aircraft (100) is running through the runway and it has been ordered by the controller of the Air Traffic Control to take the runway exit X. This runway turnoff exit (17) is continuously displayed on ground as a visual assistance to the pilot.

When aircraft (100) is close to such runway turnoff exit, an additional arrow (17) is flashed on ground to support the situational awareness of the pilot.

The person skilled in the art may recognize other ways to display information on the ground according to Air Traffic Management controls of specific airports.

To assist cockpit crew awareness, the visual information displayed on the ground may be synchronised with audio information heard in the cockpit or information displayed on the alert and indications systems of the cockpit.

## Claims

1. Lighting system (10) for an aircraft (100), the system comprising:
- at least one sensor (11) configured to sense at least weather conditions (11.1),
- at least one control unit (12) configured to:
receive data (11.1) from the at least one sensor and data (12.1) relative to an aircraft operation condition,
determine an offset light based on the received data, and
provide mask data (12.2) corresponding to the determined offset
light,
- at least one light source (13) configured to project a light beam, and
- a light filtering device (14) configured to receive the mask data (12.2) from the control unit (12) and to adapt the light beam intensity of the at least one light source (13) according to the mask data (12.2).

2. Lighting system (10) according to claim 1, wherein the at least one sensor (11) is at least one of the following types:
- optic camera,
- IR camera,
- Laser Imaging Detection and Ranging,
- humidity sensor,
- sound pressure sensor.

3. Lighting system (10) according to any of claims 1 or 2, wherein the control unit (12) is adapted to receive the aircraft operation conditions from data (12.1) collected by an Air Data Inertial Reference System of the aircraft, by an Air Traffic Control station and/or by a Navigation System of the aircraft.

4. Lighting system (10) according to any of claims 1 to 3, wherein the control unit (12) is configured to determine the offset light according to weather conditions (11.1) in accordance to a first pre-determined algorithm which takes into account at least weather conditions in the surroundings of the aircraft.

5. Lighting system (10) according to any of claims 1 to 4, wherein the light filtering device (14) is further configured to modify the light beam trajectory according to the mask data (12.2) received from the control unit (12).

6. Lighting system (10) according to claim 5, wherein at least one of the sensors (11) is a Laser Imaging Detection and Ranging, the control unit (12) is configured to determine the offset light in accordance to a second pre-determined algorithm which identifies foreign objects (16) within the vicinity of the aircraft detected by said sensor (11) and to direct the light beam trajectory to said foreign objects.

7. Lighting system (10) according to any of claims 1 to 6, wherein the light filtering device (14), preferably a Digital Light Processing filter, is configured to modify the light beam shape of the least one light source in accordance to a third pre-determined algorithm and based on the mask data (12.2) received from the control unit in order to project signs (17) on the ground.

8. Lighting system (10) according to claim 7, wherein the light filtering device (14) is configured to modify the light beam shape of the least one light source so that the projected signs (17) on the ground are at least an arrow or a warning signal.

9. Lighting system (10) according to any of claims 1 to 8, wherein the light filtering device (14) is further configured to adapt the light beam colour tone of the at least one light source (13) according to the mask data (12.2).

10. Lighting system (10) according to any of previous claims when dependant on claims 4, 6 and 7, wherein the control unit (12) is configured to operate under conditions defined in a Control Panel (15) of the aircraft cockpit in order to access the first, second and/or third pre-determined algorithms, the conditions being as follows:
- in case the Control Panel (15) commands the control unit (12) not to access any of the pre-determined algorithms, the light filtering device (14) is disabled;
- in case the Control Panel (15) commands the control unit (12) to access the first pre-determined algorithm, the light filtering device (14) is enabled to adapt the light beam intensity of the least one light source (13);
- in case the Control Panel (15) commands the control unit (12) to access the second pre-determined algorithm, the light filtering device (14) is further enabled to modify the light beam trajectory of the least one light source (13);
- in case the Control Panel (15) commands the control unit (12) to access the third pre-determined algorithm, the light filtering device (14) is further enabled to modify the light beam shape of the least one light source (13).

11. Lighting system (10) according to any of claims 1 to 9, when dependant on claims 4, 6 and 7, wherein the control unit (12) is configured to operate under conditions defined through a remote control in order to access the first, second and/or third pre-determined algorithms, the conditions being as follows:
- in case the remote control commands the control unit (12) not to access any of the pre-determined algorithms, the light filtering device (14) is disabled;
- in case the remote control commands the control unit (12) to access the first pre-determined algorithm, the light filtering device (14) is enabled to adapt the light beam intensity of the least one light source (13);
- in case the remote control commands the control unit (12) to access the second pre-determined algorithm, the light filtering device (14) is further enabled to modify the light beam trajectory of the least one light source (13);
- in case the remote control commands the control unit (12) to access the third pre-determined algorithm, the light filtering device (14) is further enabled to modify the light beam shape of the least one light source (13).

12. Lighting system (10) according to any of claims 1 to 9, when dependant on claims 4, 6 and 7, wherein the control unit (12) is further configured to self-regulate the accessing to particular pre-determined algorithms so that the light filtering device (14) is enabled to operate under conditions thereby defined.

13. Lighting system (10) according to any of claims 10 to 12, wherein the light filtering device (14) is configured to operate under simultaneous conditions allowing the control unit (12) to access to at least two of the particular pre-determined algorithms simultaneously.

14. Method for adapting the at least one light beam projected from at least one light source (13) of an aircraft (100) comprising a lighting system (10) according to any of claims 1 to 13, taking into account in situ conditions of such aircraft, the method comprising:
a) collecting by the at least one sensor (11) at least data (11.1) regarding weather conditions;
b) receiving by at least one control unit (12) data:
- from the at least one sensor (11.1), and
- data relative to the aircraft operation condition (12.1);
c) determining by said at least one control unit (12) an offset light based on the data received;
d) outputting by said at least one control unit (12) the offset light in form of mask data (12.2) to a light filtering device (14) of the lighting system (10); and
e) said light filtering device (14) adapting the light beam intensity of the at least one light source (13) according to the mask data (12.2) received from the control unit (12).

15. Method according to claim 14, wherein step (f) of the method further comprises:
said light filtering device (14) further modifying the light beam trajectory according to said mask data (12.2) received from the control unit (12).

16. Method according to any of claims 14 or 15, wherein step (f) of the method further comprises:
said light filtering device (14) further modifying the light beam shape of said least one light source (13) according to the mask data (12.2) received from the control unit (12), in order to project signs (17) on the ground.

17. Method according to any of claims 14 or 16, wherein the method further comprises a step of:
continuously adapting by the light filtering device (14) the light beam intensity of the at least one light source (13) according to the mask data (12.2) received from the control unit (12) so that the illumination provided by the lighting system is adjusted in a light feedback loop.

18. Aircraft (100) comprising a lighting system (10) according to any of the claims 1 to 13; or for using the method according to any of claims 14 to 17.
